# EUROPEAN PATENT APPLICATION

(11) **EP 4 653 150 A1**
(43) Date of publication of application: **26.11.2025**
(21) Application number: 24178104.6
(22) Date of filing: 24.05.2024
(51) Int. Cl.: B25J 9/16

(54) **DETERMINATION OF POSE ACCURACY, PATH ACCURACY AND DYNAMIC PARAMETERS OF A ROBOT**

(71) Applicant: Pmrobots GmbH, 78126 Königsfeld im Schwarzwald (DE); Universidad Politécnica de Madrid, 28040 Madrid (ES)
(72) Inventor: FERRERAS HIGUERO, Eugenio, 78126 Königsfeld im Schwarzwald (DE); VIZÁN IDOIPE, Antonio, 28040 Madrid (ES); VILLAVERDE SAN JOSÉ, Mónica, 28040 Madrid (ES)
(74) Representative: Elion IP, S.L.

(57) **Abstract**

A method comprising: tracking a robot, based on the distance between a robot point and a reference point. This distance is obtained by means of a sensor; an extendable type measuring device with an articulation at each of its ends, one for a robot point and the other for the reference point, which makes it possible to track the movements of a robot; a relative displacement and guidance mechanism to ensure the proper transmission of micromovements; the determination of the deviations of a robot with respect to a reference point, introducing the calculation according to embodiments. deviations of a robot from its nominal position, from the measurement between a robot element and a reference point; and obtaining the deviations in the movements of a robot, according to the path executed, from the projections of these deviations obtained according to the geometry held at each nominal position of the path.

## Description

### TECHNICAL SECTOR

The present invention refers to the robot sector. More specifically, the invention refers to a system and method for the determination of pose accuracy, path accuracy and dynamic parameters of a robot, based on the knowledge of the distance between a point, generally fixed, and an end of the robot using a device, being able to measure the deviation with respect to the nominal position.

### BACKGROUND TO THE INVENTION

Robots are used in a variety of applications such as handling, deburring, welding and low precision machining of robot work, among others. In these applications it is generally not critical to know with high precision their position or the movement to be performed.

There are other applications, such as machining, where, in order to use robots, it is necessary to know their position or path with a high degree of accuracy.

High-precision robot position and path measurement systems such as cameras or laser systems are well known. However, these systems have a high cost, as they are more complex due to their high number of sensors, are difficult to focus and are sensitive to ambient lighting, require the presence of qualified personnel or require installations that cannot be used in high precision processing cells, such as machining, due to lack of space or working conditions.

Methods are known that measure pose accuracy with any of the above systems. They obtain only the pose accuracy, but not the path accuracy or dynamic characteristics.

In addition, low-cost measuring systems, such as small-sized dial gauges are known, which can work in areas with little space or unfavourable working conditions. However, these systems are very inaccurate. Other simple systems known as laser gauges are more accurate. However, in both cases, they only allow the analysis of the accuracy at one position at one point in the robot's working space.

It would be desirable to have a measurement system that has high accuracy, is robust, has a small installation adapted to the working conditions, the ability to analyse accuracies in large working spaces, usable by unskilled personnel, low cost and that can obtain pose accuracy and/or path accuracy and/or dynamic characteristics. In this way, its use could be generalised in applications where a high degree of pose and/or path accuracy is required.

### GENERAL DESCRIPTION

A first aspect of the invention relates to a system for determining one or more of, among others: pose accuracy, path accuracy, and dynamic parameters of a robot. A second aspect of the invention relates to a method for determining one or more of, among others: pose accuracy, path accuracy, and dynamic parameters of a robot.

In preferred embodiments, the system and method enable the determination of at least two of the above accuracies or one of the accuracies and the dynamic parameters. In more preferred embodiments, the system and method allow for the determination of all of the above accuracies as well as the dynamic parameters.

Each of the system and method tracks a robot, based on the distance between a robot point and a reference point. This distance is obtained by means of a sensor. The system and method also perform the determination of deviations of the robot from its nominal position, based on the at least one measurement between the robot point (of a robot element, e.g. a tool or terminal element of the robot, also referred to as a TCP) and the reference point. The system and method also obtain deviations in some or all of the radial, transverse and/or tangential components to the motions of the robot element(s), according to the path executed, from projections of the deviations of the robot from its nominal position, according to the geometry held at each nominal position of the path.

The system comprises:
a sensor for distance measurement, which may be linked by means of a conductive element to a conditioner, which processes the signal received from the sensor, which is passed from the conditioner to at least one processor, or which may be linked directly to the at least one processor by means of a conductive element;
a extendable type measuring device with one articulation at each end, a first articulation for a robot point and the other, i.e. a second articulation, for a reference point, for tracking the movements of a robot;
a relative displacement and guidance mechanism, which preferably ensures an adequate transmission of micro-movements. The relative displacement and guidance mechanism allows the extension of the measuring device according to the movements of the robot element(s) picked up by the sensor; and
the at least one processor and at least one memory configured for at least performing robot tracking, determining robot deviations, and obtaining the deviations in robot movements. Optionally, the system may comprise the conditioning and/or the conductive element.

The method comprises:
tracking a robot from a distance between a robot point and a reference point, external or not to the robot, by means of distance measurements from a sensor;
determining deviations of the robot from its nominal position from measurements between the robot point (on a robot element) and the reference point;
calculating deviations in robot movements (of one or more robot points, i.e. one or more robot elements or tools), according to a path executed by the robot, at least on the basis of projections of the robot deviations from its nominal position according to a geometry specified at each nominal position of the path.

From the measurement obtained, i.e. from the measurement between the robot element and the reference point, the total deviation from the nominal position can be measured.

The system and method allow, e.g. with at least one processor, to calculate the deviations in any or all radial, transverse and/or tangential directions, with respect to the path, at one or each of the positions. For this purpose, a total deviation in radial, transverse and/or tangential deviation for each position of the trajectory is transformed, for example, with at least one processor, by geometrical methods.

The system and the method also make it possible to determine in a simple manner the dynamic properties of each element of the robot, after obtaining the positions and deflections of the element or elements whose position or trajectory are being measured. And, in this regard, in preferred embodiments, the system and method only comprise and/or use a single sensor, the sensor for distance measurement.

A third aspect of the invention relates to a data processing device or system comprising means for carrying out the method according to the second aspect of the invention.

A fourth aspect of the invention relates to an assembly comprising the data processing device or system according to the third aspect of the invention and a robot communicatively coupled to the data processing device or system. In some embodiments, the robot or the measurement device or system includes the data processing device or system.

A fifth aspect of the invention relates to a computer program comprising instructions that, when the program is executed on at least one processing device (e.g., one or more computers, one or more servers, one or more controllers, one or more ASICs, one or more FPGAs, one or more microcontrollers, etc.), causes the at least one processing device to perform the method according to the second aspect of the invention.

A sixth aspect of the invention relates to a computer-readable medium comprising instructions that, when executed by the at least one processing device, cause the at least one processing device to carry out the method according to the second aspect of the invention. In some embodiments, the readable medium is a non-transitory medium.

A seventh aspect of the invention relates to a data-carrying signal carrying the computer program according to the fifth aspect of the invention.

### BRIEF DESCRIPTION OF THE DRAWINGS

In order to complement the description herein and to assist in a better understanding of the features of the invention, a set of drawings is attached hereto as an integral part of the said description, in which the following is illustratively and non-limitingly depicted:
FIG. 1 shows a constructive scheme of the system for determining pose accuracy, path accuracy and dynamic parameters of a robot;
FIG. 2 shows application examples for which, for example, the system and method of the present disclosure may be employed, such as, for example, but without limitation, measurement of movement of a end of a robot;
FIG. 3 shows an example of a path or position of a robot that may, for example, employ the method of the present disclosure, such as, for example, but without limitation, that describing a tool implemented on the end of a robot; and
FIG. 4 is a block diagram of the method for determining pose accuracy, path accuracy and dynamic parameters of a robot, introducing the calculation according to embodiments.

### DETAILED DESCRIPTION

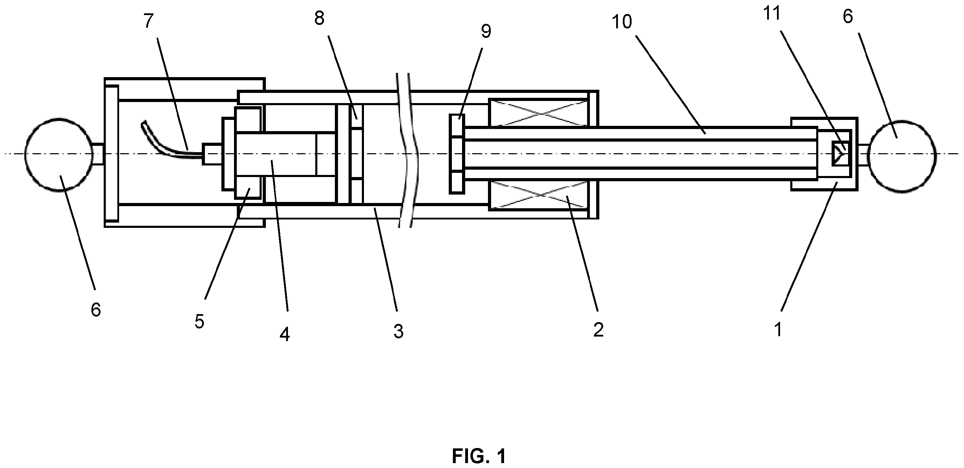

The system with a compact extendable type device with sensor (FIG. 1), which obtains the measurement between a reference point 15 and another robot point 14 of the robot element to be characterised, determines the pose accuracy and/or path accuracy 24 and/or dynamic parameters of a robot.

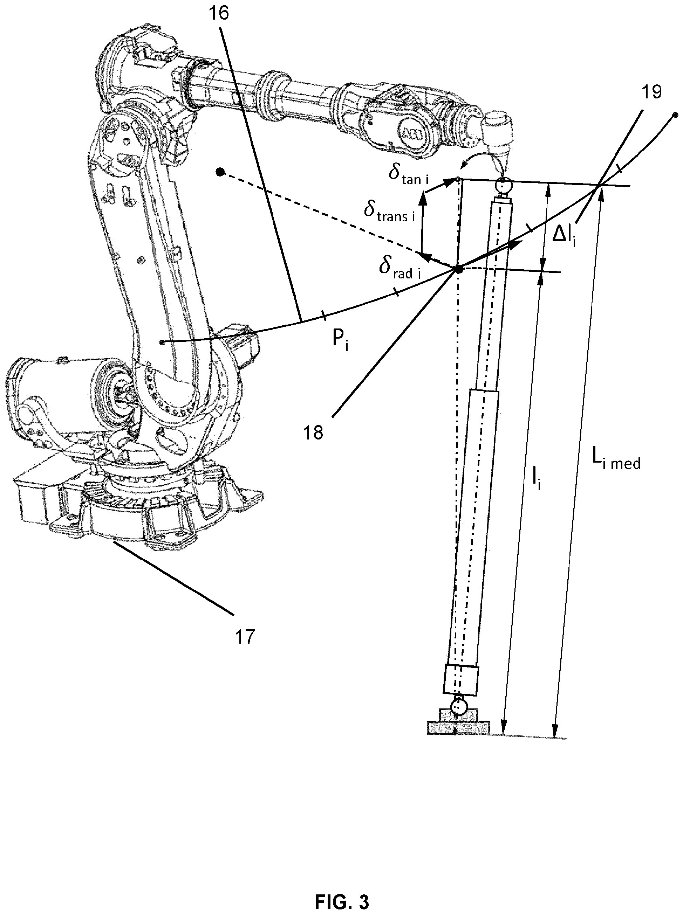

In this way, by measuring that distance, the pose accuracy and/or path accuracy 24 can be determined by obtaining the total deviations (ΔIᵢ) of a position or each position of a path from the nominal position, as well as some or all of the components of that deviation (FIG. 3).

The components of the total deviation (ΔIᵢ) are: radial deviation (δradᵢ), according to the radius described by the movement to be performed by the element, transverse deviation (δtransᵢ), according to the normal vector of the plane containing the movement to be performed, and tangential deviation (δtanᵢ), orthogonal to the radial and transverse deviations.

Specifically, the determination of pose accuracy, path accuracy and dynamic parameters of a robot, preferably in robots used in operations requiring high precision is based on the set of measurements 22 obtained by the system and method with the described sensor device. It does not require expensive systems such as cameras or laser systems, the application of which cannot be carried out in situations of lack of space or in working conditions unfavourable for such equipment. Instead, it determines the deviations of a position or each position of a trajectory with high precision by means of a sensor, in a compact, robust and low-cost way.

Thus, it is possible to obtain these data at any time without having to move the robot outside the installation in which it is located.

This enables the robot to measure the precision of its movements and obtain its dynamic parameters in a versatile way and at a low equipment and operating cost.

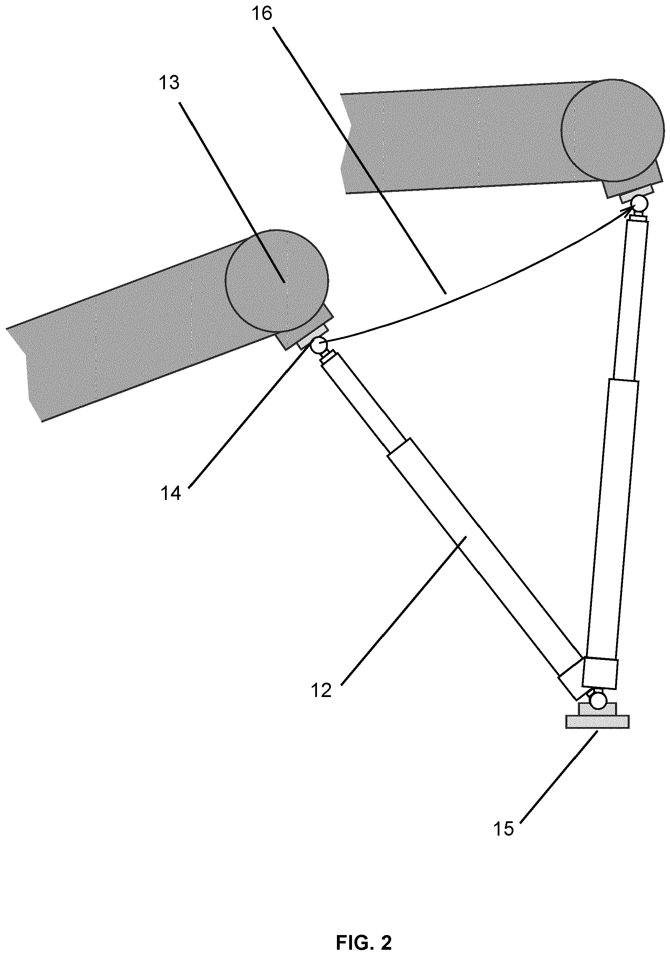

The present system and method for determining pose accuracy, path accuracy and dynamic parameters of a robot at least comprise and/or carry out:
1. A measuring device 12 of an extendable type, according to FIG. 2, constructively depicted in FIG. 1, having an articulation 6 at each of its ends, one articulation 6 for a robot point 14 and the other articulation 6 for the reference point 15, which makes it possible to track the movements of a robot 17.
   The measuring device 12 comprises a hollow body 3 inside of which a piston rod 10 slides, also generally hollow, through which a beam, generally but without limitation a laser beam, is passed to measure the distance between a reference point 15 and a point of a robot 14. It is not necessary to measure the orientation of the direction of the measurement or the use of additional sensors, as is the case with current systems.
2. The robot 17 is tracked based on the distance between a robot point 14 and a reference point 15. This distance is obtained by means of a sensor 4.

In particular embodiments, the reference point 15 is fixed. The reference point is any point in the world coordinate system, and need not to be inside the working area of the robot. In preferred embodiments, the reference point must be accessible. In some embodiments, the reference point is on a surface or an object such as, but not limited to, a wall, floor, table, another element of the robot itself, a tool, etc.

The sensor 4 is part of the measuring device 12, as described in FIG. 1. In preferred applications, the sensor 4 is of interferometric head type and of micrometric or sub-micrometric, generally nanometric, resolution. In specific embodiments, it is performed with an interferometric laser sensor. The complexity of the system, by using a single sensor in preferred embodiments, is significantly reduced.

The sensor 4 is located inside the end of the body 3. The end of the body 3, where the sensor 4 is located, is the fixed part of the extendable system, constituted by an articulation 6.

In preferred applications, at least one of the articulations is of a spherical type, with the possibility of rotation. In particular embodiments, at least one of the articulations is a precision ball and socket joint. In some implementations, the extendable system of the measuring device 12 is of a telescopic type.

A conductive element 7 connected to the sensor 4, generally but without limitation, optical fibre, collects the signal coming from the sensor 4 for data analysis 23.

A retroreflector 11, generally but without limitation, a collimated reflector element, is located at the end of the piston rod 10 (retroreflective head 1) associated with the robot element 13 to be measured, which returns the beam and, by interferometric means obtained in the conditioner, provides the relative distance of the two ends of the device.

In some embodiments, the sensor 4 is provided with a orienting and/or aligning element 5 for orienting the incident beam leaving the retroreflector head 1. By means of the adjustment system, it is possible to make the incident beam leaving the sensor 4 arrive perpendicular to the retroreflector 11 and the reflected beam return parallel to the incident beam and reach the sensor again. In this way, it is possible to measure with high precision the relative movements between body 3 and piston rod 10.

3. A relative displacement and guidance mechanism 2. The mechanism can ensure proper transmission of micro-movements of the measuring device. The relative displacement and guidance mechanism allows the extension of the measuring device according to the movements made by the robot element(s), which are picked up by the sensor.

This mechanism is made up of a relative displacement and guidance mechanism 2 between piston rod 10 and body 3 and is generally a bearing. Preferably, the mechanism is a precision mechanism.

4. Determining the deviations of a robot 19 (FIG. 3) from its nominal position 18, based on the measurement between a robot element 13 and a reference point 15.

To measure the position of the robot element 13, the device is positioned at a point in space, generally fixed in the robot's working space, and the end of the rod 10 is fixed to a flange of the robot (or to another robot element 13 or element coupled to it). As the robot moves, it slides the piston rod 10 over the body 3.

With this body 3, the robot's movements can be tracked, as at both ends there is a articulation 6, which allows the robot to be tracked.

The simplicity of its installation means that it can be operated by unskilled personnel and can be used for remote testing, as it can be integrated into an industrial network or the Internet.

The range of the measuring device 12 is regulated by the piston rod stop 9 and the travel limit stop 8 (FIG. 1). The upper measurable limit is delimited by the maximum relative space between the piston rod stop 9 and the travel limit stop 8. Similarly, the lower measurable limit corresponds to the contact between the two elements.

In this way, a robot tracking element is obtained, without the need for more sophisticated equipment, such as a laser tracker that optically tracks the robot's movement, which is normally more expensive. Thus, in preferred embodiments, the system of the present invention comprises neither a laser tracker nor a camera.

5. Obtaining the deviations in any or all of the radial, transversal and/or tangential components of the robot's movements, in accordance with the path executed, from projections of the robot's deviations with respect to its nominal position, according to the geometry that it has in each nominal position of the path.

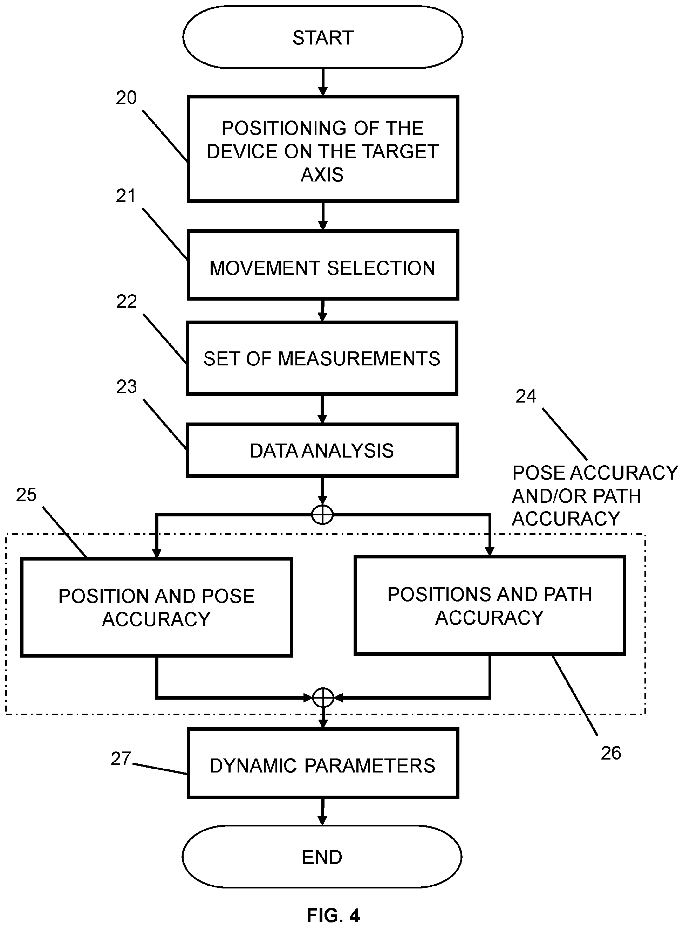

With this measuring device 12 or a combination of several measuring devices it is possible to measure two characteristics in the measuring process (FIG. 4):
- The position and pose accuracy 25.
- The positions and path accuracy 26.

For the determination of each of these characteristics, the procedure described in FIG. 4 is followed, for which the positioning of the device on the target axis 20 is carried out, positioning the device joint at the point of the robot element 13 whose positioning accuracy and/or path accuracy 24 is to be measured, and the selection of the movement 21 is performed.

The procedure for determining the position and its accuracy 25 and/or the positions and path accuracy 26 is based on a calculation of a geometrical algorithm inasmuch as, at any time, it is based on obtaining the distance from a robot to a point with a nanometric system.

Once the position has been obtained, the dynamic parameters 27 (process of obtaining dynamic parameters) can be obtained by algorithms for each element of the robot whose position has been determined (FIG. 4).

The precision of the paths 16 makes it possible to see the behaviour of the robot 17 under the combined intervention of several axes. The final result of the uncertainty is to see the combined behaviour of the different axes of the robot 17 and of the robot 17 control itself.

The system and method can be applied for the function of the pose accuracy and/or the path accuracy of any of the axes or of the TCP, i.e. of the terminal element of the robot.

Methods of the present disclosure, according to embodiments of the invention, may include one, several or all of the stages described above in relation to the measurement process and/or the dynamic parameter process.

In this text, the words "comprises", "includes" and variants thereof (such as "comprising", "including", etc.) are not to be interpreted in an exclusive manner, i.e. they do not exclude the possibility that what is described includes other elements, steps, etc.

On the other hand, the invention is not limited to the specific embodiments described, but also covers, for example, variants which can be realised by the average person skilled in the art (e.g. as regards the choice of materials, dimensions, components, configuration, etc.), within the scope of what is apparent from the claims.

## Claims

1. A system comprising:
a sensor for distance measurement;
at least one processor communicatively coupled with the sensor;
at least one memory;
an extendable type measuring device with an articulation at each end, a first articulation being configured for a robot point and a second articulation being configured for a reference point, the measuring device being configured to allow tracking of movements of a robot, and the sensor being arranged on the measuring device; and
a relative displacement and guidance mechanism configured to extend the measuring device according to the movements of the robot; and
wherein the at least one processor and the at least one memory are configured to perform the following:
tracking the robot from a distance between the robot point and the reference point based on one or more sensor distance measurements;
determining deviations of the robot from a nominal position of the robot from measurements between the robot point and the reference point;
calculating deviations in robot movements, when the robot executes a path, at least based on projections of the robot's deviations from its nominal position according to a geometry held at each nominal position of the path.

2. The system according to claim 1, wherein the at least one processor and the at least one memory are further configured to determine a positioning accuracy of the robot and/or a trajectory accuracy of the robot and/or dynamic parameters of the robot.

3. A system according to any one of the preceding claims, wherein the calculated deviations comprise one or more of: total deviation (ΔIᵢ), radial deviation (δradᵢ) according to a radius described by the motion to be performed by the robot element, transverse deviation (δtransᵢ) according to a vector normal to a plane containing the motion to be performed by the robot element, and tangential deviation (δtanᵢ) orthogonal to each of the radial and transverse deviations.

4. A system according to any one of the preceding claims, wherein the measuring device comprises a hollow body with a piston rod arranged to slide through the hollow body; and wherein the sensor is mounted on the hollow body configured to measure the distance through the hollow body and, optionally, the piston rod.

5. A system according to any one of the preceding claims, wherein the sensor is of the interferometric head type and is at least micrometer resolution.

6. A system according to any one of the preceding claims, wherein the system comprises a single sensor, the sensor being the only sensor.

7. A system according to any one of the preceding claims, wherein the system does not comprise a laser tracker and/or a camera.

8. A method comprising:
tracking a robot from a distance between a robot point and a reference point external to the robot by means of distance measurements from a sensor;
determining deviations of the robot from its nominal position from the distance measurements;
calculating deviations in movements of the robot, according to a path executed by the robot, at least based on projections of the deviations of the robot from its nominal position according to a geometry held at each nominal position of the path.

9. The method according to claim 8 further comprising determining a pose accuracy of the robot and/or a path accuracy of the robot and/or dynamic parameters of the robot.

10. The method according to claim 9 further comprising:
commanding movement of the robot according to a predetermined trajectory; and
commanding the robot to stop moving the robot when the determined motion accuracy and/or path accuracy and/or dynamic parameters are outside a predetermined range associated with a performance determined to be acceptable.

11. A method according to any one of claims 8-10, wherein calculating deviations in robot motions comprises calculating one or more of the following deviations: total deviation (ΔIᵢ), radial deviation (δradᵢ) according to a radius described by the motion to be performed by the robot element, transverse deviation (δtransᵢ) according to a normal vector of a plane containing the motion to be performed by the robot element, and tangential deviation (δtanᵢ) orthogonal to each of the radial and transverse deviations.

12. A method according to any one of claims 8-11, wherein the sensor is arranged in an extendable type measuring device having a joint at each of its ends, a first joint being configured for a robot point and a second joint being configured for a reference point.

13. A data processing device or system comprising means for carrying out the method of any one of the preceding claims.

14. An assembly comprising the data processing device or system of claim 13 and a robot communicatively coupled to the data processing device or system, the robot optionally including the data processing device or system.

15. A computer program comprising instructions that, when the program is executed on the at least one processing device, causes the at least one processing device to carry out the method of any one of claim 1 to claim 10.
